# EUROPÄISCHE PATENTSCHRIFT

(11) **EP 3 308 940 B1**
(45) Veröffentlichungstag und Bekanntmachung des Hinweises auf die Patenterteilung: **05.03.2025**
(21) Anmeldenummer: 16002224.0
(22) Anmeldetag: 17.10.2016
(51) Int. Cl.: B29C 48/68, B29C 48/08

(54) **FILTERSYSTEM FÜR VISKOSE ODER HOCHVISKOSE FLÜSSIGKEITEN, INSBESONDERE KUNSTSTOFFSCHMELZEN UND VERFAHREN ZUR FILTRATION VON VISKOSEN ODER HOCHVISKOSEN FLÜSSIGKEITEN**
FILTERING SYSTEM FOR VISCOSE OR HIGHLY VISCOSE LIQUIDS, IN PARTICULAR MOLTEN PLASTIC AND METHOD FOR FILTERING VISCOSE OR HIGHLY-VISCOSE LIQUIDS
SYSTÈME DE FILTRE POUR LES FLUIDES VISQUEUX OU FORTEMENT VISQUEUX, SURTOUT PLASTIQUE FONDU ET PROCÉDÉ DE FILTRATION DES LIQUIDES VISQUEUX OU FORTEMENT VISQUEUX

(43) Veröffentlichungstag der Anmeldung: 18.04.2018
(73) Patentinhaber: Next Generation Analytics GmbH, 4710 Grieskirchen (AT)
(72) Erfinder: Kastner, Friedrich, 4710 Grieskirchen (AT)
(74) Vertreter: Burger, Hannes Alfred

(56) Entgegenhaltungen:
- EP-A1- 0 925 904
- WO-A1-2008/031127
- CN-A- 104 526 908
- DE-A1- 4 116 199
- DE-A1- 4 426 629
- SU-A1- 1 110 651

## Beschreibung

Filtersystem für viskose oder hochviskose Flüssigkeiten, insbesondere Kunststoffschmelzen und Verfahren zur Filtration viskose oder hochviskose Flüssigkeiten.

Die Erfindung betrifft ein Verfahren und eine Vorrichtung zum Filtrieren von viskosen oder hochviskosen Flüssigkeiten, insbesondere Kunststoffschmelzen unter Verwendung einer Filterplatte.

Zur Entfernung von Verunreinigungen von viskosen oder hochviskosen Flüssigkeiten, insbesondere Kunststoffschmelzen, werden nach dem Stand der Technik im Allgemeinen Filtriervorrichtungen unter Verwendung unterschiedlicher Filterausführungen eingesetzt.

Häufig auftretende Verunreinigungen von viskosen oder hochviskosen Flüssigkeiten, wie beispielsweise Kunststoffschmelzen sind beispielsweise organische oder anorganische Verunreinigungen, wie Metalle, mineralische Stoffe und dergleichen, oder Verunreinigungen durch andere Polymere, Fremdpartikel, zu grobe Zusatzstoffe und Additive sowie deren Agglomerate. Weitere störende Verunreinigungen sind beispielsweise Abbauprodukte der viskosen oder hochviskosen Flüssigkeit, die bei der Verwendung, der Produktion oder anderen sachgemäßen oder unsachgemäßen Verwendungen, beispielsweise bei zu hoher Temperaturbelastung oder bei der Herstellung z.B. bei Kunststoffen durch zu hohe oder zu niedrige Vernetzung, wie beispielsweise Gele, entstehen.

Als Filter werden dabei insbesondere Siebplatten oder auch Filterbänder, sogenannte Bandfilter verwendet.

In jedem Fall müssen die Öffnungen des entsprechenden Filters kleiner sein als die zurückzuhaltenden und von der viskosen oder hochviskosen Flüssigkeit abzutrennenden Verunreinigungen.

Durch die Ablagerung der Verschmutzungen auf dem Filterband oder der Siebplatte nimmt der Verschmutzungsgrad der jeweiligen verwendeten Filtereinrichtung in Abhängigkeit vom Grad der Verunreinigung der viskosen oder hochviskosen Flüssigkeit und deren Durchsatz durch die Filtriervorrichtung mehr oder weniger rasch zu. Im schlimmsten Fall kann dies dazu führen, dass so gut wie keine Flüssigkeit mehr durch den Filter durchtreten kann.

In Abhängigkeit von der verwendeten Filterausführung muss daher beispielsweise eine Siebplatte ausgetauscht oder rückgespült werden. Die Reinigung erfolgt dabei abhängig vom Verschmutzungsgrad, dem Druckaufbau oder zu festgelegten Zeiten.

Dadurch ergibt sich in der Regel kein kontinuierlicher Materialstrom, da die Schmelze beim Tausch oder Rückspülvorgang durch andere Kammern geleitet werden kann und dabei Druckstöße und dergleichen auftreten können. Durch den Druckaufbau bis zum Filterwechsel verändern sich die Filtrationsbedingungen. Gerade bei hochkontaminierten Materialien mit flächigen, folienartigen Verunreinigungen kann es dabei sehr rasch zum Verschluss des Filters und damit zu sehr häufigen Wechselzyklen mit einer Unterbrechung des Materialstroms kommen.

Aus diesem Grund ist ein Filtrationssystem mit kontinuierlicher Reinigung des Filters durchaus vorteilhaft.

Bei kontinuierlichen Systemen wird zur Reinigung des Filters beispielsweise eine mit feinen Löchern ausgestattete Platte oder ein Zylinder rotiert oder von einem rotierenden Schaber oder einer Schnecke, die auf der Sieboberfläche im Materialstrom angebracht sind, ständig gereinigt. Die Verschmutzungen werden dabei durch geeignete Transportkanäle und Drucksenkungsmechanismen nach außen befördert.

Nachteil ist hier der mechanische Kontakt zwischen der Reinigungsvorrichtung und der Siebplatte oder dem Filterband, der gerade bei hohen mineralischen oder metallischen Verunreinigungen zu hohem Verschleiß der Siebplatte oder des Filterbandes führt. Außerdem treten bei den meisten Systemen relativ große Totvolumen mit hohen Materialstandzeiten auf, die einen Abbau der Schmelzen fördern können.

Beim Reinigen der Filterplatte durch beispielsweise Schaber, Schnecke und dergleichen wird die Reinigungszone nicht von Schmelze durchströmt und es tritt ein sogenannter "Passiersiebeffekt", also das Zerkleinern der Verunreinigungen und damit das Durchtreten der Verunreinigungen durch die Filterplatte, auf.

Aus AT 404562 B ist beispielsweise eine Filtervorrichtung für Verunreinigungen enthaltende Flüssigkeiten bekannt, bei denen die Reinigung des Filters durch ein Schaberelement erfolgt.

Aus DE 10 2016 202 489 ist eine Filtervorrichtung bekannt, die einen Einlassraum, einen Auslassraum, ein Filtersystem, das Einlassraum und Auslassraum voneinander trennt, bekannt, wobei die Anströmrichtung der zu filtrierenden Flüssigkeit relativ zur Flächennormalen des Filters in einem Winkel zwischen 10° und 90°, insbesondere zwischen 30° und 70°, verläuft. Durch diese tangentiale Anströmung des Filters werden sehr kleine Kammervolumen ermöglicht.

Aus DE 41 16 199 A1 ist eine Vorrichtung zum Reinigen von Kunststoffschmelzen bekannt, mit einem Gehäuse, das einen Strömungskanal und mindestens ein quer dazu bewegbares Filterelement umfasst, wobei das Filterelement von dem Strömungskanal in mindestens eine Reinigungskammer bewegbar ist, die auf der Rückseite des Filterelementes mit dem Teil des Strömungskanals in Verbindung steht, der gereinigtes Fluid führt und die auf der Vorderseite des Filterelementes mindestens einen Sammelkanal mit einer Auslassöffnung aufweist.

Aus der SU 1 110 651 A1 ist eine Vorrichtung mit sehr breiten Filtern bekannt.

Aus der WO 2008/031127 A1 ist eine Filtervorrichtung mit einer einzigen Filterplatte in Form einer rotierenden Scheibe bekannt, deren Breite mindestens der doppelten Breite der aktiven Fläche entspricht.

Aufgabe der vorliegenden Erfindung war es eine Filtervorrichtung zum Filtrieren von viskosen oder hochviskosen Flüssigkeiten, insbesondere Kunststoffschmelzen bereitzustellen, das einen kontinuierlichen Betrieb ermöglicht und zudem die Nachteile des Standes der Technik, insbesondere den Verschleiß der Filterplatte zu vermeiden. Gegenstand der Erfindung ist daher ein Filtersystem aufweisend eine in einer Filterkammer situierte Filterplatte, die durch eine Filterträgerplatte gestützt ist, wobei entweder die Filterplatte auf der Filterträgerplatte durch Gleitelemente in Nuten geführt ist oder die Filterträgerplatte mit der darauf situierten Filterplatte in der Filterkammer durch Gleitelemente geführt ist und wobei das Filtersystem mindestens eine, vorzugsweise zwei, an die Filterkammer angeschlossene Reinigungskammern aufweist, wobei die Filterplatte zur Reinigung zu der mindestens einen Reinigungskammer bewegbar ist, wobei die Filterplatte oder die Filterplatte gemeinsam mit der Filterträgerplatte in einer oszillierenden Bewegung während der Filtrierung zur Reinigung der Filterplatte geführt ist und wobei die Filterplatte mindestens doppelt so breit ist wie die aktive Filterfläche in der Filterzone, wobei die Filterzone jener Bereich ist, in dem die zu filtrierende Flüssigkeit durch die Filterplatte und die Filterträgerplatte durchtritt.

Ein weiterer Gegenstand der Erfindung ist ein Verfahren zum Filtrieren von viskosen oder hochviskosen Flüssigkeiten, insbesondere Kunststoffschmelzen gekennzeichnet durch folgende Verfahrensschritte
- Zuführen der viskosen oder hochviskosen Flüssigkeit in eine Filterkammer, in der einer Filterplatte situiert ist, die in der Filterkammer an der Unterseite und/oder seitlich durch Gleitelemente geführt und die während der Filtrierung in einer oszillierenden Bewegung geführt ist
- Zuführen der viskosen oder hochviskosen Flüssigkeit durch eine Eintrittsöffnung der Filterkammer
- Abführen der durch die Filterplatte hindurchtretenden Flüssigkeit
- Bewegen der Filterplatte zur Reinigung zu einer Reinigungskammer
- Abführen der auf der Filterplatte vorhandenen Verschmutzungen über die Reinigungskammer mit Hilfe von Fördereinrichtungen oder durch einen Rückspülvorgang,
wobei die Filterplatte mindestens doppelt so breit ist wie die aktive Filterfläche in der Filterzone, wobei die Filterzone jener Bereich ist, in dem die zu filtrierende Flüssigkeit durch die Filterplatte und die Filterträgerplatte durchtritt, und wobei beim Reinigen der Filterplatte diese nach wie vor in der Filterzone von Schmelze durchströmt wird.

Dabei läuft beim Reinigungsvorgang des Filters nicht eine Reinigungsvorrichtung über die Fläche oder relativ zur Fläche der Filterplatte, sondern die Filterplatte wird durch die Bewegung an einer oder symmetrisch an jeder Seite zu einer Reinigungskammer bewegt. Eine Reinigungsvorrichtung, beispielsweise ein Schaber, läuft nicht über die Fläche der Filterplatte oder relativ dazu, sondern die Filterplatte wird durch die Bewegung in eine oder symmetrisch an jeder Seite der Reinigungskammer bewegt. Dadurch ist der Reinigungsvorgang vom Filtrationsvorgang entkoppelt.

Ein wesentlicher Vorteil dabei ist, dass beim Reinigen der Filterplatte diese nach wie vor in der Filterzone von Schmelze durchströmt wird und das Auftreten des sogenannten "Passiersiebeffekts", also das Zerkleinern der Verunreinigungen und damit das Durchtreten der Verunreinigungen durch die Filterplatte damit praktisch ausgeschlossen ist. Insbesondere in der Schmelze vorhandene Gele können höchst wirksam entfernt werden und werden nicht bei der Reinigung durch die Filterplatte gedrückt.

Als Filterzone wird jener Bereich bezeichnet, in dem die zu filtrierende Flüssigkeit durch die Filterplatte und die Filterträgerplatte durchtritt.

In der Reinigungszone findet keine Filtration statt.

Da auch nicht ständig ein Schaber auf der Platte aufliegt, kann der Verschleiß auch bei harten Verunreinigungen der Schmelze, wie mineralischen oder metallischen Verunreinigungen stark reduziert werden.

Erfindungsgemäß kann die Filterplatte als massive Siebplatte ausgeführt sein oder auch aus einem Stapel aus einer oder mehreren. Filtermatten oder -folien bestehen. Die Siebplatte kann dabei als massive Platte mit Löchern ausgeführt sein, die z.B. durch Bohren, Senkerodieren, Wasserstrahl, Lasern, Elektronenstrahl, Teilchenstrahlen (z.B. Protonen) durch Ätzen oder dergleichen hergestellt werden. Die Filterplatte ist dabei je nach Ausführung vorzugsweise mindestens doppelt so breit wie die aktive Filterfläche in der Filterzone.

Die Filterplatte oder die Filterträgerplatte wird an der Unterseite und seitlich beispielsweise über Gleitelemente durch Nuten geführt, wobei die Gleitelemente aus verschleißarmen Materialen oder Lagerwerkstoffen, wie beispielsweise Kupfer, Aluminiumbronzen, Sinterelementen oder dergleichen bestehen können. Auch die Schmelze selbst kann hier einen dünnen Schmierfilm bilden.

Die Filterplatte kann in der Filterkammer durch eine Filterträgerplatte, die ebenfalls Öffnungen zum Durchtritt der Schmelze aufweist, gestützt werden.

Die Filterträgerplatte ist in jedem Fall so ausgeführt, dass sie einen optimalen Kompromiss aus Durchlässigkeit also geringem Strömungswiderstand und optimaler Festigkeit garantiert. Die Öffnungen der Filterträgerplatte können rund, polygonartig, als Langlöcher und dergleichen senkrecht oder in einem Winkel zur Oberfläche angeordnet sein, um z.B. eine bessere Strömungsverteilung zu ermöglichen. Auch im Längsprofil der Öffnungen können die Querschnitte und Richtungen variieren.

Weiters kann die Filterträgerplatte aus mehreren Schichten, Materialen und Kombinationen ausgeführt sein.

So kann beispielsweise die Oberfläche mit einer besonders reibungsmindernden weichen oder harten Schicht oder Struktur ausgeführt sein, um beispielsweise das Gleiten des Filterelements zu erleichtern.

Unter der Oberfläche der Filterträgerplatte kann ein besonders festes zugfestes Material angeordnet sein. Die Filterträgerplatte besteht dabei beispielsweise aus gehärtetem Stahl, auf dessen Oberfläche ein gut gleitfähiges Material, wie etwa Bronze aufgebracht ist.

Die Filterplatte wird in der Filterkammer während des Filtriervorgangs über die feststehende Filterträgerplatte hin- und her bewegt, also oszilliert. Dabei wirkt die feststehende Filterträgerplatte dann als Trennung im Schmelzestrom.

In diesem Fall ist die Filterplatte vorzugsweise als massive Platte ausgeführt, da sie direkt die Kräfte, die durch das Hin- und Herschieben der Platte entstehen, aufnehmen können muss.

In einer weiteren Ausführungsform der Erfindung kann dabei die ganze Filterplatte mit der darunter angeordneten Filterträgerplatte, die gleichzeitig die Kraft durch die Druckdifferenz im Schmelzefluss aufnimmt, oszillieren.

In diesem Fall kann die Filterplatte als dünne Platte, Folie oder Matte ausgeführt sein, da sie keine Schiebekräfte aufnehmen muss. Die Kraft, die zur Bewegung der Filterplatte und der Filterträgerplatte notwendig ist, ist in diesem Fall größer als in dem Fall, in dem nur die Filterplatte bewegt wird.

Es ist aber auch eine Kombination dieser Ausführungsformen möglich, wobei beispielsweise eine kompakte, aber dünne Filterplatte über eine Filterträgerplatte oszilliert wird. Dabei müssen durch geeignete Maßnahmen die höheren Reibungskräfte, die durch den hohen Schmelzedruck entstehen, aufgenommen werden. Dies erfolgt im Besonderen durch die Gleitelemente aus verschleißarmen Materialen oder Lagerwerkstoffen.

Die Bewegung bzw. Oszillation der Filterplatte bzw. der Filterplatte und der Filterträgerplatte kann durch einen elektrischen, hydraulischen, pneumatischen oder einen sonstigen mechanischen Antrieb erfolgen.

Auf einer oder beiden Seiten der Filterkammer ist eine Reinigungskammer angeordnet. Diese Reinigungskammer ist in Einlaufrichtung des Filters etwas höher angeordnet als die Filterplatte selbst, um zusätzlich Verschmutzungen an der Oberfläche aufzunehmen. Die Reinigungskammer ist durch Sperrelemente, die alleine oder in Kombination mit zusätzlichen Reinigungselementen die Reinigungskammer gegen die Filterkammer abdichten, ausgeführt.

Die Sperr- und/oder Reinigungselemente können mechanisch, durch Hebel oder Kulissen gesteuert, durch eine Hubbewegung, durch Federn, den Schmelzedruck, oder unabhängig elektrisch, mechanisch pneumatisch oder hydraulisch bewegt werden. Der Anpressdruck der Sperr- und/oder Reinigungselemente kann je nach Anwendung beliebig variiert werden.

Als Reinigungselemente kommen vorzugsweise Schabereinheiten in Frage.

Die Schaber selbst sind auswechselbar auf einer Basiseinheit montiert. Die Schaber können dabei aus Metallen oder Legierungen bestehen. Es können aber auch Sandwichaufbauten, die jeweils auch mit verschiedenen Oberflächenbeschichtungen wie PVD- oder CVD-, DLC- oder Keramikschichten, oder aus Kunststoffen und Kombinationen davon versehen sind, vorgesehen sein. Wesentlich ist hier die Materialkombination von Schaber und Sieb, um einerseits die optimale Reinigung zu ermöglichen, andererseits den Verschleiß gering zu halten.

Die Schaber sind dabei als Keile, Klingen, Messer, Walzen, Lamellen, angetriebene Schnecke oder als Kombinationen aus solchen Ausführungsformen ausgeführt. In einer besonderen Ausführung kann auch eine Reinigungsvorrichtung integriert sein, dadurch werden z.B. bei der Rückwärtsbewegung ein oder mehrere Schaber durch eine geschlitzte Platte geführt und beim Durchziehen die Verunreinigungen abgestreift.

Je nach Verschmutzung, Materialien, Material der Filter etc. kann bei diesem System der Anpressdruck fast beliebig variiert werden, um so eine optimale Reinigungswirkung bei minimalem Filterverschleiß zu ermöglichen.

Die Filterplatte wird durch mindestens einen Schieber, der die Reinigungskammer nach außen abdichtet, bewegt.

In einer besonderen Ausführungsform kann die Filterplatte am Ende so ausgeführt sein, dass die Abdichtung durch eine Erhöhung der Filterplatte auf die Höhe der Reinigungskammer selbst erfolgt.

Weiters können auch mehrere Abdicht- und/oder Reinigungselemente in Serie angeordnet sein.

Die Platte wird nun in die Reinigungskammer bewegt, dabei wird der Kolben zur Seite bewegt und das Volumen der Reinigungskammer freigegeben. Die eigentlichen Reinigungselemente sind in dieser Phase nicht oder nur leicht im Kontakt mit der Plattenoberfläche. Erst wenn die Platte teilweise, beispielsweise zur Hälfte in eine Reinigungskammer eingefahren wurde, wird diese durch die Sperr- und/oder Reinigungselemente gegen die Filterkammer im Wesentlichen abgedichtet.

Anschließend wird mittels eines Ventils oder durch die Geometrie der Filterplatte ein Auslaufkanal, der entsprechende Elemente wie aktive oder passive Schnecken, Wendeln oder labyrinthartige Strukturen aufweisen kann, geöffnet. Außerdem kann der Ablaufkanal thermisch vom Filter getrennt sein und so über. eigne Heiz- oder Kühlsysteme die Viskosität des auslaufenden Materials gezielt beeinflusst werden.

Die Ventile können als Kolben, Kugelhahn, Schieber, linear oder drehend, ausgeführt sein und können mechanisch, pneumatisch oder hydraulisch betätigt werden.

In einer speziellen Ausführungsform kann der Sperr- und Reinigungsschieber als Ventil ausgeführt sein.

Dabei ist beispielsweise längs am Schieber eine Profilrinne angebracht, über welche die Verschmutzung zu einem im Schieber integrierten Kanal geleitet wird. Im Reinigungszyklus ist dieser Schieber in Kontakt mit dem Filter. Genau in dieser Position liegt der im Schieber integrierte Kanal auf gleicher Ebene mit einer Bohrung in der Trägerplatte des Schiebers und gibt so direkt oder über oben genannte Drucksenkungselemente einen Kanal nach außen frei, über den die Verunreinigungen nach außen geleitet werden.

In dieser Ausführungsform kann auf weitere Ventileinheiten verzichtet werden.

Nun wird die Filterplatte in die Gegenrichtung bewegt. Durch den Schieber oder das Ende der Filterplatte wird nun das Volumen der Reinigungskammer verkleinert und gleichzeitig die Oberfläche der Filterplatte durch die Sperrkeile oder zusätzliche Abstreifprofile, rotierende Schnecken, Walzen, und dergleichen gereinigt. Die Verunreinigungen werden gemeinsam mit dem Schmelzerest in der Reinigungskammer ausgetragen.

Um das Austragen über die Breite zu vereinfachen können die Schieber bzw. Reinigungselemente beispielsweise schräg oder auch v-förmig angeordnet sein. Im Fall der V-förmigen Anordnung der Reinigungselemente, sind zwei Kanäle vorgesehen.

In einer weiteren Ausführungsform können zwei Reinigungskammern vorgesehen sein.

In diesem Fall wird der Filter auf einer Seite nur bis gut zur Hälfte oder vorzugsweise gut einem 1/3 der Gesamtlänge des Filters in der ersten Kammer gereinigt und gleichzeitig auf der Gegenseite in die zweite symmetrisch angeordnete Kammer eingefahren.

Durch den speziellen Aufbau ist es auch möglich, die Filterfläche bei der Reinigung, also vor oder während des Zurückschiebens in die aktive Position, mit einem Materialstrom von der Gegenseite rückzuspülen.

Hierfür kann entweder durch ein aktiv angesteuertes Ventil oder durch entsprechende Überströmkanäle aktiv Material von der sauberen Seite gegen die nun fast drucklose Gegenseite in der Reinigungskammer gedrückt werden.

Als Alternative kann aber auch auf der Unterseite der Reinigungskammer ein Materialvolumen mit filtriertem Material auf die Weise bereitgestellt sein, dass bei der Bewegung des Filters in die Reinigungskammer ein Strom von gereinigtem Material an der Unterseite ermöglicht wird. Dazu werden Überströmkanäle vorgesehen, die in der Endposition der Träger- oder Filterplatte offen sind. Bei der Reinigungsbewegung werden diese Überströmkanäle verschlossen und das saubere Material von unten durch die Filterträgerplatte und die Filterplatte gedrückt.

Da beim Einfahren der Filterplatte in die Reinigungskammer auch noch Schmelze in die Filterkammer und durch die Filterplatte filtriert werden kann, kann eine derartige Rückspülung in geringerem Maße auch ohne die Verwendung von Überströmkanälen erfolgen.

Natürlich können auch spezielle Rückstromventile in den Austragskanälen eingesetzt werden. Es ist auch möglich, nach dem Reinigungsvorgang über geeignete Dosierventile und Vorrichtungen oder über die Abstreifelemente, an denen die Filterplatte in der Gegenrichtung vorbeibewegt wird, um sie wieder in die Filtrierposition zu bringen, aktive Substanzen, Additive, Katalysatoren etc. aufzubringen, um beispielsweise die Eigenschaften der Schmelze zu modifizieren.

Gemäß einer weiteren Ausführungsform sind zwei Filterkammern jeweils mittels eines schaltbaren Ventils mit einem gemeinsamen Schmelzekanal dermaßen verbunden, dass in dem einen Zustand des schaltbaren Ventils die Schmelze durch die erste Filterkammer läuft und in dem anderen Zustand des schaltbaren Ventils die Schmelze durch die zweite Filterkammer läuft.

Bevorzugt ist das Ventil so ausgestaltet, dass ein paralleler Betrieb möglich ist. Es können auch drei oder mehr Filterkammern über solche Ventile parallel geschaltet sein, so dass stets mindestens einer der Filter einen Schmelzefluss gewährleistet.

In einer weiteren Ausführungsform können zwei oder mehr Filterkammern übereinander oder nebeneinander in Serie angeordnet sein, sodass der Ausfluss des vorangehenden mit dem Zufluss des nachfolgenden verbunden ist und die Schmelze sukzessive durch die zwei oder mehr Bandfilter hindurchgeführt wird.

Der Austrag der Verunreinigung in Form des Filterkuchens kann seitlich in Richtung der Siebbewegung oder 90° dazu oder nach oben erfolgen. Wichtig ist hier, dass die Verunreinigungen dabei einen Druckabbau auf Atmosphärendruck erfahren.

Im einfachsten Fall wird dies durch eine Wendel oder Förderschnecke erreicht. Um die Verunreinigungen nach dem Kammerventil aktiv nach außen zu fördern kann für jede Seite eine eigene Wendel oder Förderschnecke, oder falls die Austragskanäle zusammenlaufen auch eine gemeinsame Wendel oder Förderschnecke das Material nach außen fördern. Dabei darf kein weiterer zu starker Abbau der Schmelze erfolgen, um nicht Ablagerungen im Austragsbereich zu generieren.

In einer weiteren Ausführungsform kann das Material aber bei der Ausbringung aktiv gekühlt werden, sodass nur zähflüssige oder sogar erstarrte Verunreinigungen nach außen gelangen. Hierfür wird im Filter ein thermisch vom beheizten System entkoppelter Kaltkanal vorgesehen.

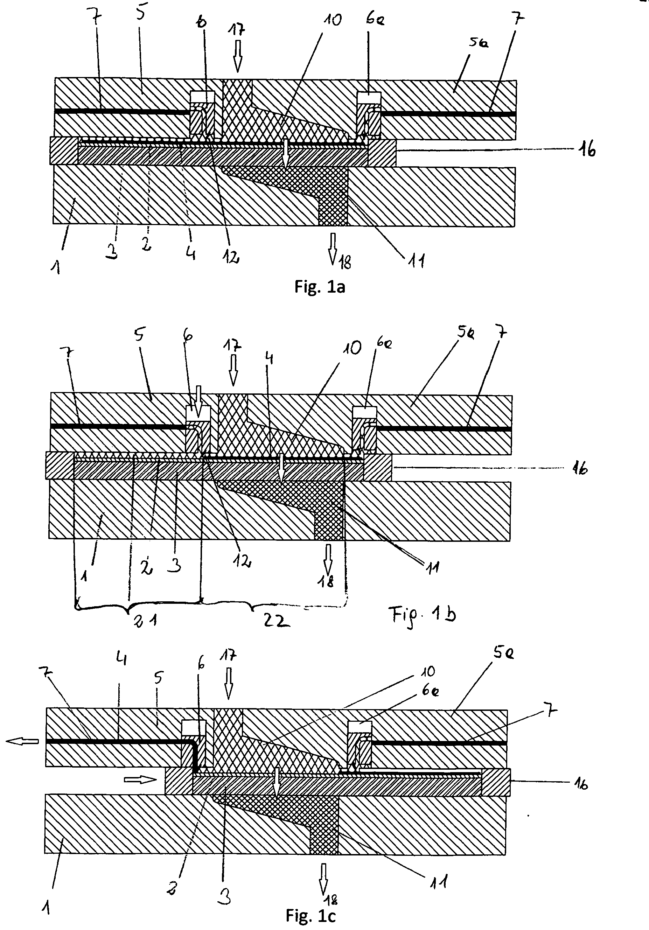

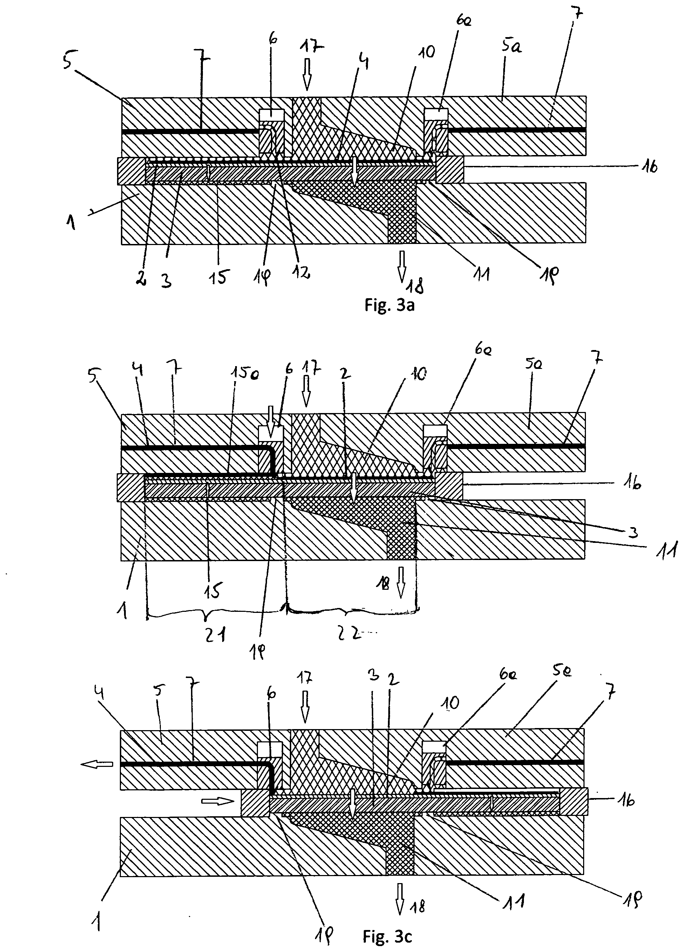

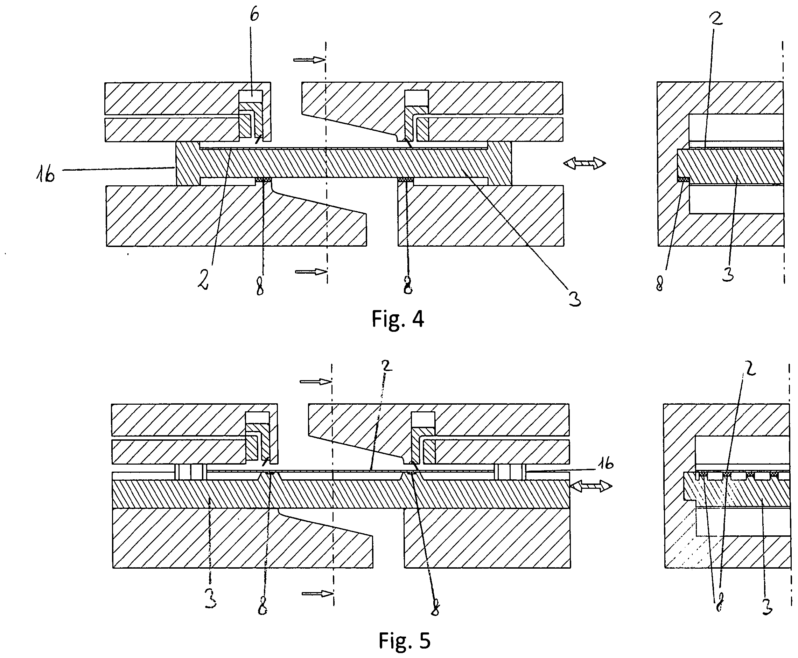

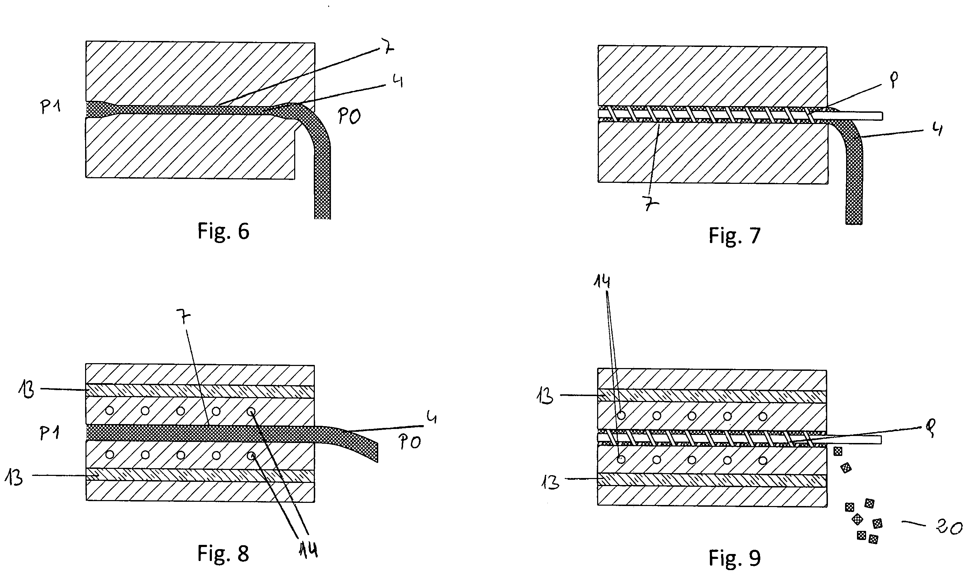

In den Figuren 1 bis 7 sind erfindungsgemäße Ausführungsformen des Verfahrens dargestellt.

Darin bedeuten
- 1: die Filterkammer
- 2: die Filterplatte
- 3: die Filterträgerplatte
- 4: die Verunreinigungen (Filterkuchen)
- 5, 5a: eine Reinigungskammer
- 6, 6a: einen Sperrschieber mit integriertem Ventil
- 7: den Austragskanal in der Reinigungskammer
- 8: Gleitlager
- 9: eine Förderschnecke zum Abtransport des Filterkuchens
- 10: die zu filtrierende viskose oder hochviskose Flüssigkeit, beispielsweise die zu filtrierende Kunststoffschmelze
- 11: das Filtrat der viskosen oder hochviskosen Flüssigkeit
- 12: ein Sperrelement
- 13: eine Isolationsschicht
- 14: Heiz- bzw. Kühlkanäle
- 15: die Schmelzekammer für die Rückspülung
- 15a: die rückgespülte Schmelze
- 16: den Schieber zu Bewegung der Filter- bzw. der Filterträgerplatte
- 17: den Schmelzezufluss
- 18: den Schmelzeabfluss
- 19: ein Absperrelement für die zwangsweise Rückspülung
- 20: erstarrtes Verunreinigungsmaterial
- 21: die Reinigungszone
- 22: die Filterzone

In Figur 1 ist ein Verfahren zur Reinigung des Filters dargestellt, bei dem die Reinigung des Filters ohne Rückspülung erfolgt.

Die Vorrichtung besteht dabei aus einer Filterkammer 1, einer Filterplatte 2, die von einer Filterträgerplatte 3 gestützt wird.

Wie in Figur 1 a dargestellt lagern sich im Verlauf des Filtriervorgangs einer viskosen oder hochviskosen Flüssigkeit 10 die Verunreinigungen auf der Filterplatte 2 als Filterkuchen 4 ab.

Zur Reinigung der Filterplatte 2 vom Filterkuchen 4 wird das Ventil 6, das in diesem Fall als Kolben ausgeführt ist, betätigt und der Filterkuchen 4 in die Reinigungskammer 5 geleitet und durch den Kanal 7 aus der Reinigungskammer entfernt. Das Abziehen des Filterkuchens 4 erfolgt durch Verschieben der Filterplatte 2 gegebenenfalls gemeinsam mit der Filterträgerplatte 3 in Pfeilrichtung, wobei die Filterplatte 2 zu einer zweiten Reinigungskammer 5a transportiert und der Vorgang zur vollständigen Reinigung der Filterplatte transportiert wird.

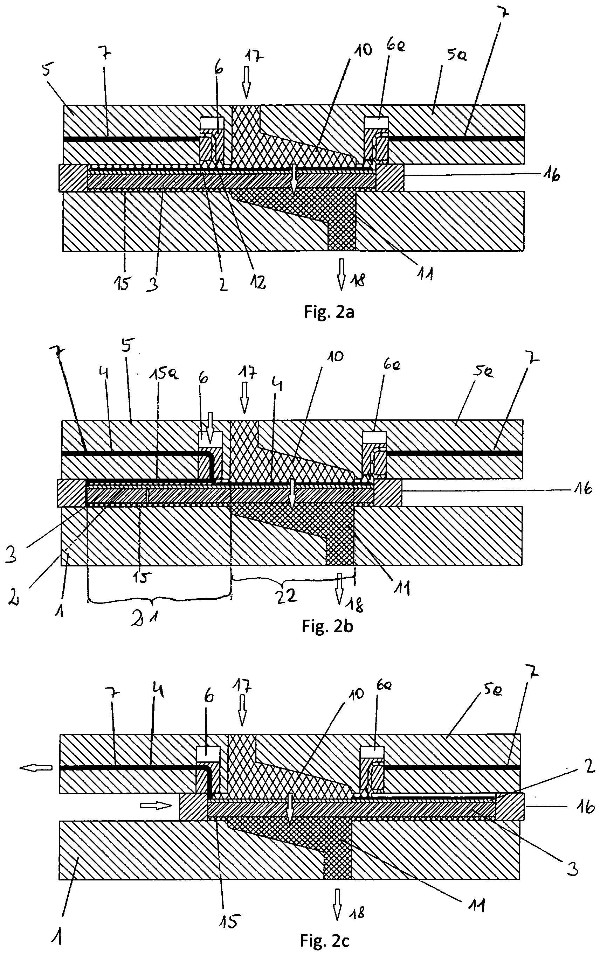

In Figur 2 ist ein Verfahren zur Reinigung des Filters mit freier Rückspülung dargestellt.

Dabei wird durch den bei der Reinigung des Filters entstehenden Druckunterschied vor und hinter der Filterplatte 2 ein Teil des Filtrats 11 aus der Schmelzekammer für die Rückspülung 15 wieder zurück durch die Filterträgerplatte 3 und die Filterplatte 2 in der Rückspülzone 21 unter den Filterkuchen 4 gedrückt (Figur 2 b). Durch die rückgespülte Schmelze 15a wird der Filterkuchen 4 angehoben und wird dadurch leichter in den Kanal 7 der Reinigungskammer 5 gedrückt.

Das Abziehen des Filterkuchens 4 erfolgt durch Verschieben der Filterplatte 2 gegebenenfalls gemeinsam mit der Filterträgerplatte 3 in Pfeilrichtung, wobei die Filterplatte 2 zu einer zweiten Reinigungskammer 5a transportiert und der Vorgang zur weiteren Reinigung der Filterplatte transportiert wird.

In Figur 3 ist ein Verfahren zur Filtration mit erzwungener Rückspülung dargestellt. Hier wird der Rückspülvorgang durch Abdichten der Rückspülzone 15 durch die Schieberbewegung eingeleitet. Das Filtersystem weist dabei ein zusätzliches Absperrelement 19 auf. Das Material durch den Filter von unten mit erhöhtem Druck durchgedrückt und der Reinigungsvorgang der Filterplatte analog der in Figur 2 dargestellten Vorgangsweise durchgeführt.

Figur 4 zeigt eine Ausführungsform des Filters, bei der Filterplatte 2 und Filterträgerplatte 3 gemeinsam oszillieren, also hin- und her geschoben werden. Die Filterträgerplatte 3 ist dabei auf Gleitlagern 8 in der Filterkammer 1 gelagert.

Figur 5 zeigt eine Ausführungsform des Filters, bei der nur die Filterplatte 2 oszilliert wird. Dabei ist die Filterplatte 2 auf Gleitlagern 8 gelagert, die auf der Filterträgerplatte 3 situiert sind.

In Figur 6 ist eine Ausführungsform zum Abtransport des Filterkuchens 4 aus der Reinigungskammer dargestellt. Dabei wird im Kanal 7 durch Veränderung des Querschnitts der Druckabbau von einem Druckniveau P1 auf ein Druckniveau P0 durchgeführt und der Filterkuchen 4 aus dem Kanal transportiert

In Figur 7 erfolgt der kontrollierte Abtransport des Filterkuchens 4 mittels einer Förderschnecke 9.

In Figur 8 sind zum Abtransport des Filterkuchens 4 Kühlkanäle 14 in der Reinigungskammer vorgesehen, sodass durch Kühlung der Druckabbau in der Reinigungskammer erfolgt. Die Isolationsschicht 13 dient zur Entkopplung der Temperatur des Austragungskanals 7, somit kann durch eine niedrigere Temperatur als im Filter die Temperatur des auszutragenden Materials gesenkt und die Viskosität erhöht werden.

Figur 9 zeigt eine Ausführungsform gemäß Figur 7, bei der der Druckabbau jedoch durch aktive Kühlung durch Kühlkanäle 14 erfolgt. Dadurch tritt am Ende des Austragskanals 2 erstarrtes Material aus.

## Patentansprüche

1. Filtersystem aufweisend eine in einer Filterkammer (1) situierte Filterplatte (2), die durch eine Filterträgerplatte (3) gestützt ist, wobei entweder die Filterplatte (2) auf der Filterträgerplatte (3) durch Gleitelemente in Nuten geführt ist oder die Filterträgerplatte (3) mit der darauf situierten Filterplatte (2) in der Filterkammer (1) durch Gleitelemente geführt ist, und wobei das Filtersystem mindestens eine, vorzugsweise zwei, an die Filterkammer (1) angeschlossene Reinigungskammer(n) (5, 5a) aufweist, wobei die Filterplatte (2) zur Reinigung zu der mindestens einen Reinigungskammer (5, 5a) bewegbar ist, **dadurch gekennzeichnet, dass** die Filterplatte (2) oder die Filterplatte (2) gemeinsam mit der Filterträgerplatte (3) in einer oszillierenden Bewegung während einer Filtrierung zur Reinigung der Filterplatte (2) geführt ist und dass die Filterplatte mindestens doppelt so breit ist wie die aktive Filterfläche in der Filterzone (22), wobei die Filterzone (22) jener Bereich ist, in dem die zu filtrierende Flüssigkeit (10) durch die Filterplatte (2) und die Filterträgerplatte (3) durchtritt.

2. Filtersystem nach Anspruch 1, **dadurch gekennzeichnet, dass** die Reinigungskammer(n) (5, 5a) durch Sperrelement(e) gegen die Filterkammer (1) abgedichtet ist/sind.

3. Filtersystem nach Anspruch 2, **dadurch gekennzeichnet, dass** das/die Sperrelement(e) mechanisch, durch Hebel oder Kulissen gesteuert, durch eine Hubbewegung, durch Federn, den Schmelzedruck, oder unabhängig elektrisch, mechanisch, pneumatisch oder hydraulisch bewegbar ist/sind.

4. Filtersystem nach Anspruch 2 oder 3, **dadurch gekennzeichnet, dass** das/die Sperrelement(e) als Sperrschieber (6, 6a) mit integriertem Ventil, über welches der Filterkuchen (4) aus der Reinigungskammer (5, 5a) entfernbar ist, ausgeführt ist/sind.

5. Filtersystem nach einem der Ansprüche 1 bis 4, **dadurch gekennzeichnet, dass** eine zusätzliche Reinigungsvorrichtung in Form einer Schabereinheit vorgesehen ist.

6. Filtersystem nach einem der Ansprüche 1 bis 5, **dadurch gekennzeichnet, dass** die Filterplatte (2) als Platte, Folie oder Matte ausgeführt ist.

7. Filtersystem nach einem der Ansprüche 1 bis 6, **dadurch gekennzeichnet, dass** in der Reinigungskammer (5, 5a) eine Förderschnecke (9) zum Austrag des Filterkuchens (4) vorgesehen ist.

8. Verfahren zum Filtrieren von viskosen oder hochviskosen Flüssigkeiten (10), insbesondere Kunststoffschmelzen **gekennzeichnet durch** folgende Verfahrensschritte:
- Zuführen der viskosen oder hochviskosen Flüssigkeit (10) in eine Filterkammer (1), in der einer Filterplatte (2) situiert ist, die in der Filterkammer (1) an der Unterseite und/oder seitlich durch Gleitelemente geführt und die während einer Filtrierung in einer oszillierenden Bewegung geführt ist
- Zuführen der viskosen oder hochviskosen Flüssigkeit (10) durch eine Eintrittsöffnung der Filterkammer (1)
- Abführen der durch die Filterplatte (2) hindurchtretenden Flüssigkeit
- Bewegen der Filterplatte (2) zur Reinigung zu einer Reinigungskammer (5, 5a)
- Abführen der auf der Filterplatte (2) vorhandenen Verschmutzungen über die Reinigungskammer (5, 5a) mit Hilfe von Fördereinrichtungen oder durch einen Rückspülvorgang,
wobei die Filterplatte (2) mindestens doppelt so breit ist wie die aktive Filterfläche in der Filterzone (22), wobei die Filterzone (22) jener Bereich ist, in dem die zu filtrierende Flüssigkeit (10) durch die Filterplatte (2) und die Filterträgerplatte (3) durchtritt, und wobei beim Reinigen der Filterplatte (2) diese nach wie vor in der Filterzone (22) von Schmelze durchströmt wird.

9. Verfahren nach Anspruch 8, **dadurch gekennzeichnet, dass** das Verfahren mit einem Filtersystem nach einem der Ansprüche 1 bis 7 durchgeführt wird.

10. Verfahren nach Anspruch 8 oder 9, **dadurch gekennzeichnet, dass** der Rückspülvorgang durch den Druckunterschied vor und nach der Filterplatte (2) eingeleitet wird.

11. Verfahren nach Anspruch 8 oder 9, **dadurch gekennzeichnet, dass** der Rückspülvorgang durch Abdichten der Rückspülkammer eingeleitet wird.

## Claims

1. A filter system comprising a filter plate (2) which is located in a filter chamber (1) and is supported by a filter carrier plate (3), wherein either the filter plate (2) is guided on the filter carrier plate (3) by sliding elements in grooves or the filter carrier plate (3) with the filter plate (2) located thereon is guided in the filter chamber (1) by sliding elements, and wherein the filter system has at least one, preferably two, cleaning chamber(s) (5, 5a) connected to the filter chamber (1), wherein the filter plate (2) is movable to the at least one cleaning chamber (5, 5a) for cleaning, **characterized in that** the filter plate (2), or the filter plate (2) together with the filter carrier plate (3), is guided in an oscillating movement during filtration for cleaning the filter plate (2), and that the filter plate is at least twice as wide as the active filter surface in the filter zone (22), wherein the filter zone (22) is the region in which the liquid (10) to be filtered passes through the filter plate (2) and the filter carrier plate (3).

2. The filter system according to claim 1, **characterized in that** the cleaning chamber(s) (5, 5a) is/are sealed off from the filter chamber (1) by barrier element(s).

3. The filter system according to claim 2, **characterized in that** the barrier element(s) can be moved mechanically, in a manner controlled by levers or linkages, by a lifting movement, by springs, the melt pressure, or independently electrically, mechanically, pneumatically or hydraulically.

4. The filter system according to claim 2 or 3, **characterized in that** the barrier element(s) is/are configured as a barrier slider (6, 6a) with an integrated valve, via which the filter cake (4) can be removed from the cleaning chamber (5, 5a).

5. The filter system according to one of claims 1 to 4, **characterized in that** an additional cleaning device in the form of a scraper unit is provided.

6. The filter system according to one of claims 1 to 5, **characterized in that** the filter plate (2) is configured as a plate, foil or mat.

7. The filter system according to one of claims 1 to 6, **characterized in that** a screw conveyor (9) for discharging the filter cake (4) is provided in the cleaning chamber (5, 5a).

8. A method for filtering viscous or highly viscous liquids (10), in particular plastic melts, **characterized by** the following method steps:
- feeding the viscous or highly viscous liquid (10) into a filter chamber (1) in which a filter plate (2) is located, which is guided in the filter chamber (1) on the underside and/or laterally by sliding elements and which is guided in an oscillating movement during filtration
- feeding the viscous or highly viscous liquid (10) through an inlet opening of the filter chamber (1)
- discharging the liquid passing through the filter plate (2)
- moving the filter plate (2) to a cleaning chamber (5, 5a) for cleaning
- removing the contamination present on the filter plate (2) via the cleaning chamber (5, 5a) with the aid of conveying devices or by a backwashing process,
wherein the filter plate (2) is at least twice as wide as the active filter surface in the filter zone (22), wherein the filter zone (22) is the region in which the liquid (10) to be filtered passes through the filter plate (2) and the filter carrier plate (3), and wherein, during cleaning of the filter plate (2), melt continues to flow through it in the filter zone (22).

9. The method according to claim 8, **characterized in that** the method is carried out using a filter system according to one of claims 1 to 7.

10. The method according to claim 8 or 9, **characterized in that** the backwashing process is initiated by the pressure difference upstream and downstream of the filter plate (2).

11. The method according to claim 8 or 9, **characterized in that** the backwashing process is initiated by sealing the backwashing chamber.

## Revendications

1. Système de filtre comprenant une plaque de filtre (2) située dans une chambre de filtre (1), qui est supportée par une plaque de support de filtre (3), dans lequel soit la plaque de filtre (2) est guidée sur la plaque de support de filtre (3) par des éléments de glissement dans des rainures, soit la plaque de support de filtre (3) est guidée par des éléments de glissement avec la plaque de filtre (2) située sur celle-ci dans la chambre de filtre (1), et dans lequel le système de filtre comprend au moins une, de préférence deux chambres de nettoyage (5, 5a) raccordées à la chambre de filtre (1), la plaque de filtre (2) pouvant être déplacée vers la au moins une chambre de nettoyage (5, 5a) pour un nettoyage, **caractérisé en ce que** la plaque de filtre (2) ou la plaque de filtre (2) conjointement avec la plaque de support de filtre (3) est guidée dans un mouvement oscillant pendant une filtration pour le nettoyage de la plaque de filtre (2) et **en ce que** la plaque de filtre est au moins deux fois plus large que la surface de filtre active dans la zone de filtre (22), la zone de filtre (22) étant la zone dans laquelle le liquide à filtrer (10) passe à travers la plaque de filtre (2) et la plaque de support de filtre (3).

2. Système de filtre selon la revendication 1, **caractérisé en ce que** la ou les chambres de nettoyage (5, 5a) sont étanches par rapport à la chambre de filtre (1) par l'intermédiaire d'un ou de plusieurs éléments de blocage.

3. Système de filtre selon la revendication 2, **caractérisé en ce que** le ou les éléments de blocage sont déplaçables mécaniquement, commandés par des leviers ou des coulisses, par un mouvement de levage, par des ressorts, par la pression de la masse fondue, ou indépendamment électriquement, mécaniquement, pneumatiquement ou hydrauliquement.

4. Système de filtre selon la revendication 2 ou 3, **caractérisé en ce que** le ou les éléments de blocage sont réalisés sous la forme d'un coulisseau de blocage (6, 6a) avec une vanne intégrée, par l'intermédiaire de laquelle le gâteau de filtration (4) peut être retiré de la chambre de nettoyage (5, 5a).

5. Système de filtre selon l'une quelconque des revendications 1 à 4, **caractérisé en ce qu'**un dispositif de nettoyage supplémentaire est prévu sous la forme d'une unité de raclage.

6. Système de filtre selon l'une quelconque des revendications 1 à 5, **caractérisé en ce que** la plaque de filtre (2) est réalisée sous la forme d'une plaque, d'une feuille ou d'un tapis.

7. Système de filtre selon l'une quelconque des revendications 1 à 6, **caractérisé en ce qu'**une vis de transport (9) est prévue dans la chambre de nettoyage (5, 5a) pour l'évacuation du gâteau de filtration (4).

8. Procédé de filtration de liquides visqueux ou fortement visqueux (10), en particulier de matières plastiques fondues, **caractérisé par** les étapes de procédé suivantes consistant à :
- alimenter le liquide visqueux ou fortement visqueux (10) dans une chambre de filtre (1) dans laquelle est placée une plaque de filtre (2) qui est guidée dans la chambre de filtre (1) par le bas et/ou latéralement par des éléments de glissement et qui est guidée lors d'une filtration dans un mouvement oscillant,
- alimenter le liquide visqueux ou fortement visqueux (10) via un orifice d'entrée de la chambre de filtre (1),
- évacuer le liquide passant à travers la plaque de filtre (2),
- déplacer la plaque de filtre (2) vers une chambre de nettoyage (5, 5a) pour un nettoyage,
- évacuer les salissures présentes sur la plaque de filtre (2) via la chambre de nettoyage (5, 5a) à l'aide de convoyeurs ou par un processus de lavage à contre-courant,
dans lequel la plaque de filtre (2) est au moins deux fois plus large que la surface de filtre active dans la zone filtrante (22), la zone de filtre (22) étant la zone dans laquelle le liquide à filtrer (10) passe à travers la plaque de filtre (2) et la plaque de support de filtre (3), et lors du nettoyage de la plaque filtrante (2), celle-ci étant toujours traversée par de la matière fondue dans la zone de filtre (22).

9. Procédé selon la revendication 8, **caractérisé en ce que** le procédé est réalisé avec un système de filtre selon l'une quelconque des revendications 1 à 7.

10. Procédé selon la revendication 8 ou 9, **caractérisé en ce que** le processus de lavage à contre-courant est initié par la différence de pression avant et après la plaque de filtre (2).

11. Procédé selon la revendication 8 ou 9, **caractérisé en ce que** le processus de lavage à contre-courant est initié par l'étanchéification de la chambre de lavage à contre-courant.
